# FASCICULE DE BREVET EUROPEEN

(11) **EP 2 917 091 B1**
(45) Date de publication et mention de la délivrance du brevet: **07.02.2018**
(21) Numéro de dépôt: 13791846.2
(22) Date de dépôt: 16.10.2013
(51) Int. Cl.: B62D 25/06

(54) **TRAVERSE AVANT DE PAVILLON POUR VÉHICULE AUTOMOBILE A DÉFORMATION PROGRESSIVE**
SCHRITTWEISE VERFORMBARER VORDERDACHQUERTRÄGER FÜR EIN KRAFTFAHRZEUG
PROGRESSIVELY DEFORMABLE FRONT ROOF CROSSMEMBER FOR A MOTOR VEHICLE

(30) Priorité: 08.11.2012 FR 1260610
(43) Date de publication de la demande: 16.09.2015
(73) Titulaire: PSA Automobiles SA, 78300 Poissy (FR)
(72) Inventeur: BENANE, Said, F-94550 Chevilly Larue (FR)
(74) Mandataire: Fosse, Danièle
(86) Numéro de dépôt international: PCT/FR2013/052471
(87) Numéro de publication internationale: WO 2014/072601

(56) Documents cités:
- EP-A1- 2 730 485
- EP-A1- 2 752 358
- US-A1- 2007 176 467
- US-A1- 2009 284 047

## Description

La présente invention concerne une traverse de la caisse d'un véhicule automobile, destinée à relier entre elles les deux parties supérieures des côtés d'habitacle dans une zone située au-dessus de la baie du pare-brise. Le document US 2009/0284047 A1 divulgue le préambule de la revendication 1.

L'invention concerne également un véhicule automobile comportant une telle traverse.

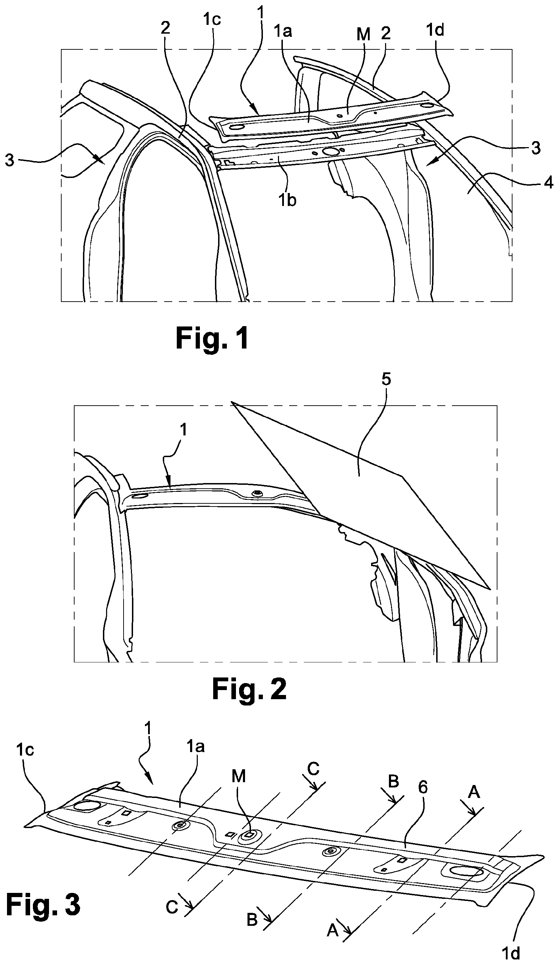

La figure 1 représente une partie de la caisse d'un véhicule automobile.

La référence 1 désigne la traverse qui est destinée à relier entre elles, les deux parties supérieures 2 des côtés d'habitacle 3, dans une zone située au-dessus de la baie 4 du pare-brise.

Cette traverse 1 comprend une coque supérieure 1a en tôle, soudée sur une coque inférieure 1b en tôle.

Ces deux coques 1a, 1b forment entre elles, un corps creux.

Cette traverse 1 doit résister aux efforts engendrés sur elle en cas de retournement du véhicule.

A cet effet, pour être homologués les véhicules doivent subir des tests appelés GS 39 qui consistent à appliquer sur la traverse 1 une plaque en acier 5, comme montré sur la figure 2.

Cette plaque 5 est appliquée près d'une extrémité de la traverse 1 sous un angle égal à 30° par rapport à un plan horizontal.

L'effort appliqué sur la traverse 1 est égal à 1,3 tonne.

Dans le cas des cabriolets dépourvus de pavillon rigide pour que la traverse 1 puisse résister aux efforts précités, celle-ci doit être renforcée pour augmenter sa raideur.

Un tel renforcement de la traverse augmente la masse du véhicule, ce qui accroît le coût et la consommation du véhicule.

Le but de la présente invention est de remédier aux inconvénients ci-dessus.

Ce but est atteint, selon l'invention, grâce à une traverse de la caisse d'un véhicule automobile, destinée à relier entre elles les deux parties supérieures des côtés d'habitacle dans une zone située au-dessus de la baie du pare-brise, cette traverse comprenant une coque supérieure en tôle soudée sur une coque inférieure en tôle définissant entre elles un corps creux allongé, caractérisée en ce que la section transversale de ce corps creux évolue progressivement entre chacune de ses deux extrémités destinées à être reliées à une partie supérieure d'un côté d'habitacle et le milieu du corps creux de façon à permettre une déformation progressive de la traverse en cas de choc exercé sur la coque supérieure de la traverse entre ladite extrémité et le milieu de la traverse.

Ainsi, la section transversale de la traverse, au lieu d'être constante, évolue progressivement entre chacune des deux extrémités de la traverse et le milieu de celle-ci.

De ce fait, en cas de choc sur la traverse, celle-ci se déforme progressivement en absorbant d'une manière progressive l'énergie du choc.

Par conséquent, la traverse n'a nullement besoin d'être renforcée pour résister aux efforts. Selon l'invention, la section transversale du corps creux évolue progressivement entre chacune desdites extrémités et ledit milieu de façon à augmenter progressivement la raideur de la traverse entre chacune desdites extrémités et ledit milieu.

Dans un mode de réalisation avantageux de l'invention, la coque supérieure de la traverse comporte une nervure emboutie s'étendant dans la direction de la longueur de la traverse.

Cette nervure constitue une solution pour faire évoluer le profil de la section transversale de la traverse entre chacune de ses extrémités et son milieu.

En effet, pour augmenter progressivement la raideur de la traverse, il suffit d'augmenter progressivement la largeur de la nervure entre les extrémités et le milieu de celle-ci.

De préférence, la coque inférieure comporte également une nervure emboutie s'étendant dans la direction de la longueur de la traverse.

Pour faire évoluer la raideur de la traverse, on peut diminuer progressivement la hauteur de la nervure entre chacune des deux extrémités de la traverse et son milieu.

Dans un mode de réalisation préféré de l'invention, la nervure emboutie sur la coque inférieure est située sous la nervure emboutie sur la coque supérieure.

Selon un autre aspect, l'invention concerne également un véhicule automobile comportant une traverse selon l'invention.

Ce véhicule est de préférence un véhicule comportant un pavillon amovible ou un cabriolet.

D'autres particularités et avantages de l'invention apparaîtront encore tout au long de la description ci-après.

Aux dessins annexés, donnés à titre d'exemples, non limitatifs :
- la figure 3 est une vue en perspective de la coque supérieure d'une traverse de véhicule automobile selon l'invention,
- la figure 4 est une vue en coupe de la traverse selon l'invention, suivant le plan A-A de la figure 3,
- la figure 5 est une vue en coupe suivant le plan B-B de la figure 3,
- la figure 6 est une vue en coupe suivant le plan C-C de la figure 3,
- les figures 7, 8 et 9 sont des vues montrant l'évolution des coupes transversales suivant les plans A-A, B-B et C-C, après les essais de choc.

L'invention concerne une traverse 1 de véhicule automobile qui est destinée, comme montré sur la figure 1, à relier entre elles les deux parties supérieures 2 des côtés d'habitacle 3 dans une zone située au-dessus de la baie 4 du pare-brise.

La traverse 1 comprend une coque supérieure 1a en tôle soudée sur une coque inférieure 1b en tôle définissant entre elles un corps creux allongé, légèrement courbé.

La coque supérieure 1a est représentée seule, sur la figure 3.

Conformément à l'invention, la section transversale du corps creux constituant la traverse 1 évolue progressivement entre chacune de ses deux extrémités 1c, 1d destinées à être reliées à une partie supérieure 2 d'un côté d'habitacle 3 et le milieu M du corps creux allongé.

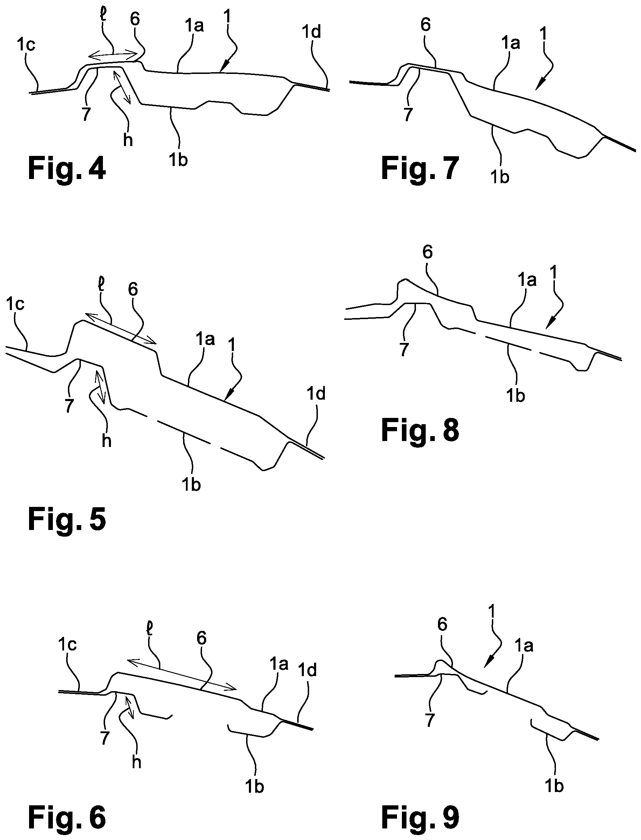

Cette évolution de la section transversale du corps creux est illustrée par les figures 4, 5 et 6.

Cette évolution de la section de la traverse est telle qu'elle permet une déformation progressive de la traverse 1 en cas de choc exercé sur la coque supérieure 1a de la traverse 1 entre l'extrémité 1c, 1d et le milieu M de la traverse.

Dans cet exemple, la section transversale du corps creux évolue progressivement entre chacune des extrémités 1c, 1d et le milieu M de façon à augmenter progressivement la raideur de la traverse 1 entre chacune de ces extrémités 1c, 1d et le milieu M de cette traverse 1.

Cette évolution permet une absorption progressive de l'énergie du choc exercé sur la traverse 1 en cas de retournement du véhicule.

Dans l'exemple montré sur les figures 3 à 6, la coque supérieure 1a de la traverse 1 comporte une nervure emboutie 6 s'étendant dans la direction de la longueur de la traverse 1.

On voit sur la figure 3 et les figures 4 à 6 que la largeur l de la nervure 6 augmente progressivement entre chacune des extrémités 1c, 1d et le milieu M de la traverse.

La figure 3 montre en particulier que dans la zone compris entre les coupes B-B et C-C, la paroi latérale de la nervure 6 présente une courbure qui permet d'augmenter progressivement la largeur l de la nervure 6 et par conséquent d'augmenter progressivement la raideur de la traverse 1.

Les figures 4 à 6 montrent en outre que la coque inférieure 1b de la traverse 1 comporte également une nervure emboutie 7 s'étendant dans la direction de la longueur de la traverse 1.

La hauteur h de cette nervure diminue progressivement entre chacune des extrémités 1c, 1d et le milieu M.

Cette nervure 7 emboutie sur la coque inférieure 1b est située sous la nervure 6 emboutie sur la coque supérieure 1a.

La nervure 7 emboutie sur la coque inférieure 1b a comme la nervure 6 de la coque supérieure 1a, une incidence sur la résistance de la traverse 1 au choc.

Les figures 7, 8 et 9 montrent les déformations subies par la traverse 1 après choc dans les différentes sections définies par les plans A-A, B-B et C-C.

La figure 7 montre que dans la section A-A la traverse n'a pas subi de déformation importante: les coques 1a et 1b sont restées espacées l'une de l'autre.

Les figures 8 et 9 montrent en revanche que dans les sections B-B et C-C, la traverse a subi des déformations importantes: les coques 1a et 1b se sont rapprochées l'une de l'autre.

Cependant, ces coques 1a et 1b ont absorbé l'énergie du choc sans rupture de la tôle.

Le principal avantage de l'invention réside dans le fait qu'elle permet de réduire la masse de la traverse, ce qui permet d'alléger le véhicule et de diminuer la consommation de celui-ci.

## Revendications

1. Traverse (1) de la caisse d'un véhicule automobile, destinée à relier entre elles les deux parties supérieures (2) des côtés d'habitacle (3) dans une zone située au-dessus de la baie (4) du pare-brise, cette traverse (1) comprenant une coque supérieure (1a) en tôle soudée sur une coque inférieure (1b) en tôle définissant entre elles un corps creux allongé dont la section transversale évolue progressivement entre chacune de ses deux extrémités (1c, 1d) destinées à être reliées à une partie supérieure (2) d'un côté d'habitacle (3) et le milieu (M) du corps creux, **caractérisée en ce que** la section transversale du corps creux évolue progressivement entre chacune desdites extrémités (1c, 1d) et ledit milieu (M) de façon à augmenter progressivement la raideur de la traverse (1) entre chacune desdites extrémités (1c, 1d) et ledit milieu (M) permettant une déformation progressive de la traverse (1) en cas de choc exercé sur la coque supérieure (1a) de la traverse entre ladite extrémité (1c, 1d) et le milieu (M) de la traverse.

2. Traverse selon la revendication 1, **caractérisée en ce que** la coque supérieure (1a) de la traverse (1) comporte une nervure emboutie (6) s'étendant dans la direction de la longueur de la traverse.

3. Traverse selon la revendication 2, **caractérisée en ce que** la largeur (l) de ladite nervure (6) augmente progressivement entre chacune desdites extrémités (1c, 1d) et ledit milieu (M).

4. Traverse selon l'une des revendications 1 à 3, **caractérisée en ce que** la coque inférieure (1b) de la traverse (1) comporte une nervure emboutie (7) s'étendant dans la direction de la longueur de la traverse.

5. Traverse selon la revendication 4, **caractérisée en ce que** la hauteur (h) de ladite nervure (7) diminue progressivement entre chacune desdites extrémités (1c, 1d) et ledit milieu (M).

6. Traverse selon la revendication 2 et l'une des revendications 4 ou 5, **caractérisée en ce que** la nervure (7) emboutie sur la coque inférieure (1b) est située sous la nervure (6) emboutie sur la coque supérieure (1a).

7. Véhicule automobile comportant une traverse (1) selon l'une des revendications 1 à 6.

8. Véhicule automobile selon la revendication 7, **caractérisé en ce qu'**il comporte un pavillon amovible.

9. Véhicule automobile selon l'une des revendications 7 ou 8, **caractérisé en ce qu'**il est un cabriolet.

## Patentansprüche

1. Querträger (1) der Karosserie eines Kraftfahrzeugs, der dazu bestimmt ist, zwei obere Teile (2) der Fahrgastzellenseiten (3) in einer Zone, die oberhalb der Öffnung (4) der Windschutzscheibe liegt, zu verbinden, wobei dieser Querträger (1) eine obere Schale (1a) aus Blech, die auf eine untere Schale (1b) aus Blech geschweißt ist, umfasst, die miteinander einen länglichen Hohlkörper bilden, dessen Querschnitt allmählich zwischen jedem seiner zwei Seiten (1c, 1d) verläuft, die dazu bestimmt sind, mit einem oberen Teil (2) einer Fahrgastzellenseite (3) und der Mitte (M) des Hohlkörpers verbunden zu sein, **dadurch gekennzeichnet, dass** der Querschnitt des Hohlkörpers allmählich zwischen jedem der Enden (1c, 1d) und der Mitte (M) derart verläuft, dass die Steifigkeit des Querbalkens (1) zwischen jedem der Enden (1c, 1d) allmählich zunimmt, und die Mitte (M) eine allmähliche Verformung des Querbalkens (1) in dem Fall eines Stoßes erlaubt, der auf die obere Schale (1a) des Querträgers zwischen dem Ende (1c, 1d) und der Mitte (M) des Querträgers ausgeübt wird.

2. Querträger nach Anspruch 1, **dadurch gekennzeichnet, dass** die obere Schale (1a) des Querträgers (1) eine gestanzte Rippe (6) umfasst, die sich in die Richtung der Länge des Querträgers erstreckt.

3. Querträger nach Anspruch 2, **dadurch gekennzeichnet, dass** die Breite (l) der Rippe (6) allmählich zwischen jedem der Enden (1c, 1d) und der Mitte (M) zunimmt.

4. Querträger nach einem der Ansprüche 1 bis 3, **dadurch gekennzeichnet, dass** die untere Schale (1b) des Querträgers (1) eine gestanzte Rippe (7) umfasst, die sich in die Richtung der Länge des Querträgers erstreckt.

5. Querträger nach Anspruch 4, **dadurch gekennzeichnet, dass** die Höhe (h) der Rippe (7) allmählich zwischen jedem der Enden (1c, 1d) und der Mitte (M) abnimmt.

6. Querträger nach Anspruch 2 und einem der Ansprüche 4 oder 5, **dadurch gekennzeichnet, dass** die Rippe (7), die auf der unteren Schale (1b) gestanzt ist, unter der Rippe (6) liegt, die auf der oberen Schale (1a) gestanzt ist.

7. Kraftfahrzeug, das einen Querträger (1) nach einem der Ansprüche 1 bis 6 umfasst.

8. Kraftfahrzeug nach Anspruch 7, **dadurch gekennzeichnet, dass** es ein abnehmbares Dach umfasst.

9. Kraftfahrzeug nach einem der Ansprüche 7 oder 8, **dadurch gekennzeichnet, dass** es ein Kabriolett ist.

## Claims

1. A crossmember (1) of the body of a motor vehicle, intended to interconnect the two upper parts (2) of the passenger compartment sides (3) in a zone situated above the windscreen aperture (4), this cross-member (1) including an upper body shell (1a) made of sheet metal welded to a lower body shell (1b) made of sheet metal, defining between them an elongate hollow body, the cross-section of which changes progressively between each of its two ends (1c, 1d) that are intended to be connected to an upper portion (2) of a passenger compartment side (3) and the midpoint (M) of the hollow body, **characterized in that** the cross-section of the hollow body changes progressively between each of said ends (1c, 1d) and said midpoint (M) so as to increase progressively the stiffness of the crossmember (1) between each of said ends (1c, 1d) and said midpoint (M) permitting a progressive deformation of the crossmember (1) in the event of an impact exerted on the upper body shell (1a) of the crossmember between said end (1c, 1d) and the midpoint (M) of the crossmember.

2. The crossmember according to Claim 1, **characterized in that** the upper body shell (1a) of the crossmember (1) comprises a stamped rib (6) extending in the direction of the length of the crossmember.

3. The crossmember according to Claim 2, **characterized in that** the width (1) of said rib (6) increases progressively between each of said ends (1c, 1d) and said midpoint (M).

4. The crossmember according to one of Claims 1 to 3, **characterized in that** the lower body shell (1b) of the crossmember (1) comprises a stamped rib (7) extending in the direction of the length of the crossmember.

5. The crossmember according to Claim 4, **characterized in that** the height (h) of said rib (7) reduces progressively between each of said ends (1c, 1d) and said midpoint (M).

6. The crossmember according to Claim 2 and one of Claims 4 or 5, **characterized in that** the stamped rib (7) on the lower body shell (1b) is situated beneath the stamped rib (6) on the upper body shell (1a).

7. A motor vehicle comprising a crossmember (1) according to one of Claims 1 to 6.

8. The motor vehicle according to Claim 7, **characterized in that** it comprises a removable roof.

9. The motor vehicle according to one of Claims 7 or 8, **characterized in that** it is a cabriolet.
